# EUROPÄISCHE PATENTSCHRIFT

(11) **EP 3 792 171 B1**
(45) Veröffentlichungstag und Bekanntmachung des Hinweises auf die Patenterteilung: **23.08.2023**
(21) Anmeldenummer: 20000349.9
(22) Anmeldetag: 06.10.2017
(51) Int. Cl.: B62M 9/10

(54) **MEHRFACH-RITZELANORDNUNG UND FAHRRADANTRIEB MIT EINER SOLCHEN MEHRFACH-RITZELANORDNUNG**
MULTI-GEAR PINION ASSEMBLY AND BICYCLE TRANSMISSION WITH SUCH A MULTI-GEAR PINION ASSEMBLY
DISPOSITIF À PLUSIEURS PIGNONS ET ENTRAÎNEMENT PAR ROUE PORTEUSE DOTÉ D'UN TEL DISPOSITIF À PLUSIEURS PIGNONS

(30) Priorität: 13.10.2016 DE 102016012229
(43) Veröffentlichungstag der Anmeldung: 17.03.2021
(62) Teilanmeldung aus: 17001645.5
(73) Patentinhaber: SRAM Deutschland GmbH, 97424 Schweinfurt (DE)
(72) Erfinder: Reinbold, Matthias, 97072 Würzburg (DE)

(56) Entgegenhaltungen:
- EP-A2- 2 022 712
- DE-U1-202016 100 725
- US-A- 3 478 614

## Beschreibung

Die Erfindung betrifft eine Mehrfach-Ritzelanordnung zur Montage an einer Hinterradnabe und einen Fahrradantrieb mit einer solchen Mehrfach-Ritzelanordnung.

Die Anzahl von Ritzeln an Mehrfach-Ritzelanordnungen zur Montage an einer Hinterradnabe eines Fahrrades hat in den letzten Jahren immer weiter zugenommen. Eine hohe Anzahl von Ritzeln erlaubt eine gute Gang-/ bzw. Übersetzungsabdeckung und/oder eine feine Abstufung zwischen den verschiedenen Gangstufen. Zehn oder elf Ritzel in Kombination mit einem, zwei oder drei vorderen Kettenblättern stellen gängige Fahrradantriebe dar. Modernere Antriebe verwenden sogar zwölf bis zu vierzehn Ritzel, meist in Kombination mit einem oder zwei vorderen Kettenblättern, und bieten dem Fahrradfahrer eine große Gangauswahl.

Die erhöhte Anzahl von Ritzeln bringt allerdings auch Probleme mit sich. Zum einen ist der Bauraum, in dem das Ritzel-Paket angeordnet wird aufgrund der Fahrradgeometrie und verschiedener technischer Standards beschränkt. Der axiale Bauraum für die Mehrfach-Ritzelanordnung wird auf der Innenseite durch den Antreiberanschlag und die Laufrad-Speichen und auf der Außenseite vom Rahmenanschlag vorgegeben. In montiertem Zustand schlägt das größte Ritzel der Mehrfach-Ritzelanordnung in axialer Richtung an dem Antreiberanschlag an. Die größten Ritzel des Ritzel-Pakets können dem Verlauf der Laufrad-Speichen folgen (man spricht auch von überhängenden Ritzeln). Das heißt die axiale Breite der Mehrfach-Ritzelanordnung, gemessen von der Außenseite des kleinsten Ritzels bis zur Innenseite des größten Ritzels, kann im Bereich der Zähne des größten Ritzels größer sein, als im Bereich der Ritzelanschlagfläche des größten Ritzels.

Zum anderen erhöht sich mit der steigenden Anzahl von Ritzeln auch der Kettenschräglauf, welcher sich negativ auf die Laufeigenschaften und den Wirkungsgrad des Fahrradantriebs auswirkt. Ein erhöhter Kettenschräglauf kann gerade beim Eingreifen der Fahrradkette in eines der kleineren Ritzel dazu führen, dass die Fahrradkette mit einem nächstgrößeren Ritzel kollidiert. Dabei kommt es vermehrt zu Geräuschbildung, Abnutzung, Reibverlusten und auch Fehlschaltungen.

Die US 3,478,614 beschäftigt sich bereits mit dem Problem des Kettenschräglaufs. Gezeigt wird ein Fahrradantrieb mit einem vorderen Kettenblatt und einem hinteren Ritzel-Paket. Allerdings wird darin ein veraltetes Ritzel-Paket mit nur fünf Ritzeln beschrieben. Zwischen jeweils zwei benachbarten Ritzeln der fünf Ritzel ergeben sich vier vorbestimmte Abstände. Die Abstände zwischen dem größten und dem zweitgrößten Ritzel und zwischen dem zweitgrößten und mittleren Ritzel sind dabei kleiner bemessen, als die Abstände zwischen dem mittleren Ritzel und zweitkleinsten Ritzel und zwischen dem zweitkleinsten und kleinsten Ritzel. Damit ergibt sich eine gleichmäßige Abstandsverteilung von kleinen und größeren Abständen. Allerdings sind die baulichen Voraussetzungen dieses Ritzel-Pakets völlig andere, da der vorhandene Bauraum für lediglich fünf Ritzel keine Problematik darstellt.

Aus dem Stand der Technik sind auch Ritzel-Pakete mit einer erhöhten Anzahl von Ritzeln bekannt, die versuchen das Problem des begrenzten Bauraums und/oder des Kettenschräglaufs auf unterschiedliche Weise zu beheben.

Aus der EP 2 022 712 ist ein Antrieb mit einem Ritzel-Pakete mit elf oder zwölf Kettenrädern bekannt. Jeweils zwei benachbarte Ritzel sind in einem vorgegebenen Abstand angeordnet. Dabei sind die drei Kettenräder mit den kleinsten Durchmessern in einem größeren Abstand zueinander angeordnet als die übrigen Kettenblätter. Bei elf Ritzeln ergeben sich zehn Abstände, wobei zwei größere Abstände (P', P") und acht kleine Abstände (P) vorgesehen sind. Bei zwölf Ritzeln ergeben sich elf Abstände, wobei ebenfalls zwei größere Abstände (P', P") und neun kleine Abstände (P) vorgesehen sind.

Die gattungsgemäße DE 20 2016 100 725 U1 offenbart ein Ritzel-Paket mit 13 Ritzeln, die in zwölf vorgegebenen Abständen zueinander positioniert sind. Die großen zehn Ritzel sind jeweils in einem konstanten kleineren Abstand angeordnet. Nur die kleinsten drei Ritzel sind in einem größeren Abstand angeordnet. Es ergeben sich zwölf Abstände, die sich in drei größere und neun kleine Abstände aufteilen. Um dem Kettenschräglauf weiter entgegenzuwirken, ist bei diesem Fahrradantrieb die vordere Kettenblattanordnung beweglich gelagert. Die Kettenblattanordnung folgt der Position der Kette auf dem Ritzel und stellt dadurch eine annähernd neutrale Kettenlinie her. Diese Lösung ist allerdings konstruktiv aufwendig, störungsanfällig und nur für vordere Einzelkettenblätter geeignet.

Aus der US 5,954,604 ist ein Ritzel-Paket mit 14 Ritzeln bekannt. Um dem eingeschränkten Bauraum gerecht zu werden, wird der Abstand zwischen den Ritzeln so weit verringert, dass er geringer als die Ritzeldicke bemessen ist, und gerade noch genügend Platz für die eingreifende Fahrradkette bietet. Das Problem des wachsenden Kettenschräglaufs wird dabei ignoriert.

Es stellt sich die Aufgabe, eine zeitgemäße Mehrfach-Ritzelanordnung mit einer erhöhten Anzahl von Ritzeln bereitzustellen, die die Folgen des Kettenschräglaufs minimiert, ohne dabei den vorgegebenen Bauraum zu verlassen.

Gelöst wird diese Aufgabe durch eine Mehrfach-Ritzelanordnung zur Montage an einer Hinterradnabe und zum Eingriff in eine Fahrradkette nach Anspruch 1.

Die erfindungsgemäße Mehrfach-Ritzelanordnung umfasst sowohl Anordnungen mit nur einem einzelnen kleinsten Abstand, als auch Anordnungen mit einer Reihe von gleichgroßen kleinsten Abständen. Ausschlaggebend ist, dass alle Abstände, die ein größeres Abstandsmaß als der kleinste Abstand aufweisen, den größeren Abständen zuzuordnen sind.

Vorteilhaft bei dieser Ausgestaltung ist, dass aufgrund der Aufteilung der vorgegebenen Abstände in kleinste Abstände und größere Abstände, sowohl der vorgegebene Bauraum eingehalten werden kann, als auch die Auswirkungen des Kettenschräglaufs eingedämmt werden können.

Die vorgegebenen Abstände teilen sich in kleinste Abstände und größere Abstände auf. Bei einem nicht beanspruchten Anteil von höchstens 70 % von kleinsten Abständen, entfallen also mindestens 30 % aller vorgegebenen Abstände auf die größeren Abstände. Der Anteil an kleinsten Abständen sorgt dafür, dass die Ritzel nah zueinander positioniert werden und damit wenig Bauraum benötigen. Der Anteil an größeren Abständen hingegen hilft, die negativen Folgen des Kettenschräglaufs zu mindern.

Gemäß der erfindungsgemäßen Mehrfach-Ritzelanordnung entsprechen höchstens 50 %, der vorgegebenen Abstände dem kleinsten Abstand. Bei diesem Anteil entfallen mindestens 50 % der vorgegebenen Abstände auf die größeren Abstände.

Besonders bevorzugt entspricht ein Anteil von etwa 45 % der vorgegebenen Abstände dem kleinsten Abstand. Im Umkehrschluss heißt dies, dass etwa 55 % aller Abstände auf die größeren Abstände entfallen. Mit dieser Abstandsverteilung ist die axiale Breite des Ritzel-Pakets gerade noch klein genug, um in den vorgegebenen Bauraum zu passen und gleichzeitig wird der Kette ausreichend Platz gegeben, um auch bei einem maximalen Kettenschräglauf nicht mit benachbarten Ritzeln zu kollidieren.

Gemäß einer Ausführungsform der erfindungsgemäßen Mehrfach-Ritzelanordnung sind die kleinsten Abstände im Bereich der größeren Ritzel mit größeren Zähnezahlen angeordnet. Bei einem sehr geringen Anteil von kleinsten Abständen kann auch nur ein einziger kleinster Abstand A1 vorliegen, der im Bereich der größeren Ritzel angeordnet ist. Die Zähnezahl eines Ritzels geht einher mit dessen Durchmesser. Mit steigender Zähnezahl vergrößert sich auch der Ritzeldurchmesser. Das heißt, die Ritzel mit größeren Zähnezahlen sind die durchmessergrößeren Ritzel und die Ritzel mit kleineren Zähnezahlen sind die durchmesserkleineren Ritzel der Mehrfach-Ritzelanordnung.

Gemäß einer Ausführungsform der erfindungsgemäßen Mehrfach-Ritzelanordnung sind die größeren Abstände im Bereich der kleineren Ritzel mit kleineren Zähnezahlen angeordnet.

Im Bereich der kleineren Ritzel sind die Folgen des Kettenschräglaufs besonders negativ, weil in diesem Bereich die schräglaufende Kette mit dem nächstgrößeren Ritzel kollidieren könnte. Dies ist im Bereich der größeren Ritzel weniger von Bedeutung, weil die schräglaufende Kette genügend Platz hat, über das nächstkleinere Ritzel hinwegzulaufen. Um innerhalb der Abmessungen des vorgegebenen Bauraums zu bleiben, ist es daher ausreichend, die kleineren Ritzel in einem größeren Abstand voneinander zu positionieren. Die größeren Ritzel hingegen können enger zueinander positioniert werden. An den größeren Ritzeln können zusätzlich andere Maßnahmen zu Minderungen der Folgen des Kettenschräglaufs eingesetzt werden.

Der Abstand zwischen zwei benachbarten Ritzeln wird von der Außenseite eines Ritzels bis zur Außenseite des benachbarten nächstkleineren Ritzels gemessen. Gemäß einer Ausführungsform weisen die Abstände, die dem kleinsten Abstand entsprechen, ein Maß auf, das zumindest der Summe aus der axialen Dicke des nächstkleineren Ritzels plus einer Dicke einer Innerlasche plus einer Dicke einer Außenlasche der Fahrradkette entspricht. Zu diesem theoretischen Mindestabstandsmaß kommt noch ein geringes Spiel und stellt sicher, dass die Fahrradkette in die Zähne eines Ritzels eingreifen kann, ohne mit einem benachbarten Ritzel zu kollidieren.

Gemäß der erfindungsgemäßen Mehrfach-Ritzelanordnung sind die Abstände, die dem größeren Abstand entsprechen, nicht konstant.

Die größeren Abstände steigen insbesondere linear an. Das heißt, die Abstände zwischen aufeinanderfolgenden Ritzeln vergrößern sich linear von Ritzel-Paar zu Ritzel-Paar. Je kleiner das Ritzel, umso größer ist dessen Abstand zum nächstgrößeren Ritzel. Der lineare Anstieg der größeren Abstände folgt dem nach außen bzw. in Richtung der kleinen Ritzel ansteigenden Kettenschräglauf.

Alternativ steigen die Abstände, die dem größeren Abstand entsprechen, nicht-linear an. So kann dem besonders starken Kettenschräglauf auf dem kleinsten Ritzel entgegengetreten werden.

Gemäß einer Ausführungsform der erfindungsgemäßen Mehrfach-Ritzelanordnung sind die Abstände, die dem größeren Abstand entsprechen, um etwa 2 % bis 15 % größer als die kleinsten Abstände.

Gemäß einer Ausführungsform der erfindungsgemäßen Mehrfach-Ritzelanordnung umfasst die Mehrfach-Ritzelanordnung genau zwölf Ritzel. Insbesondere weist das kleinste der zwölf Ritzel genau zehn Zähne und das größte der zwölf Ritzel entweder 26, 28, 32 oder 33 Zähne auf. Das Verhältnis von kleinster Zähnezahl zu größter Zähnezahl wird auch Spreizung genannt und ist ausschlaggebend für die zur Verfügung stehenden Übersetzungen. Je größer die Spreizung, desto größer ist der Unterschied zwischen größter und kleinster Übersetzung.

Je nach Antriebsart sind auch andere Zähnezahlen möglich. Für einen Antrieb mit nur einem vorderen Kettenblatt und dreizehn hinteren Ritzeln sind insbesondere zehn oder elf Zähne auf dem kleinsten Ritzel und 36 Zähne auf dem größten Ritzel möglich.

Antriebe für Mountainbikes verfügen üblicherweise über eine noch größere Spreizung. Bei Ritzel-Anordnungen mit elf Ritzeln sind insbesondere zehn Zähne am kleinsten Ritzel und 42 Zähne auf dem größten Ritzel oder elf Zähne am kleinsten Ritzel und 46 Zähne auf dem größten Ritzel denkbar. Bei Anordnungen mit zwölf Ritzeln stellen 10 Zähne am kleinsten Ritzel und 50 Zähne am größten Ritzel oder 11 Zähne am kleinsten und 55 Zähne am größten Ritzel eine sinnvolle Spreizung dar.

Gemäß einer Ausführungsform der erfindungsgemäßen Mehrfach-Ritzelanordnung weist das kleinste Ritzel mit der kleinsten Zähneanzahl eine Wulst im Bereich des Fußkreises auf. Diese Wulst drückt die in das kleinste Ritzel eingreifende Fahrradkette in axialer Richtung weiter nach außen, also vom nächstgrößeren Ritzel weg und verhindert dadurch eine Kollision mit diesem. Dadurch werden die Folgen des Kettenschräglaufs, der am kleinsten Ritzel am stärksten ausgeprägt ist, weiter vermindert. Da die Wulst nur im Bereich des Fußkreises angeordnet ist und nicht auch der Bereich des Zahnkopfes des kleinsten Ritzels verdickt ist, führt sie die Ketten, stört aber gleichzeitig nicht beim Schalten, wenn sich die Kette vom Bereich des Fußkreises in den Bereich des Zahnkopfes bewegt. Das heißt, je weiter die Kette am Ritzel radial nach außen wandert, desto mehr verlagert sie sich aufgrund des gegenüber der Wulst dünner werdenden Zahns auch axial in Richtung des nächstgrößeren Ritzels.

Die Wulst kann entweder allein oder in Kombination mit einem größeren Abstand A2-A7 zwischen dem kleinsten und zweitkleinsten Ritzel eingesetzt werden. Die Kombination aus beiden ist besonders effektiv.

Gemäß einer Ausführungsform der erfindungsgemäßen Mehrfach-Ritzelanordnung weist mindestens ein Ritzel der Ritzelanordnung eine Abfolge von einem dünnen Zahn, einem dicken Zahn und einem weiteren dünnen Zahn auf. Dabei ist ein dicker Zahn so dick ausgebildet, dass er zwar in ein Außenlaschenpaar der Kette eingreifen kann, nicht aber in ein Innenlaschenpaar. Dies wirkt sich positiv auf die Kettenführung aus, weil die dicken Zähne die Lücke zwischen den Außenlaschen der Kette mehr ausfüllen, als normale Zähne und damit die Kette weniger Bewegungsfreiheit gegenüber dem Ritzel hat. Gerade die unmittelbare Abfolge eines dünnen Zahns, eines dicken Zahns und eines weiteren dünnen Zahns hat sich bewährt. Diese Abfolge kann sich entlang des Umfangs eines Ritzels mehrfach wiederholen. Bei Ritzeln mit gerader Zähnezahl können auch alle Zähne im Wechsel dünn und dick ausgebildet sein. Die axiale Verdickung kann entweder auf beiden Seiten, also auf Innen- und Außenseite des Ritzels ausgeprägt sein, oder nur an einer. Vorzugsweise ist die Verdickung nur an der Innenseite des Ritzels, also in Richtung der Fahrradmitte angeordnet. Die Außenseite des Ritzels kann dadurch flach bleiben, was für die Schaffung von Schaltgassen relevant ist. Um die Mehrfach-Ritzelanordnung gleichzeitig auch schaltfähig zu machen, weisen die Ritzel neben der Abfolge von dünnen und dicken Zähnen auch Einprägungen und/oder Anfasungen auf, die Schaltgassen bilden. Die Abfolge von alternierenden dünnen und dicken Zähnen kann an einem oder mehreren Ritzeln angeordnet sein. Gerade an den beiden größten Ritzeln ist sie von besonderer Bedeutung, weil dort der Kettenschräglauf am stärksten ausgebildet ist. Durch die bessere Führung der Kette werden die Negativfolgen des Kettenschräglaufs an den größeren minimiert. Die durch den Schräglauf erzeugte Vibration der Kette wird vermindert. Und damit auch die einhergehende erhöhte Geräuschbildung und Gefahr von Kettenabsprüngen. Zusätzlich können die Zähne des größten Ritzels auf der Innenseite verrundete Ausgleitfasen aufweisen. Das heißt der Übergang zwischen der sich am Zahnkopf befindenden Ausgleitfase zum Zahnkörper verläuft tangential, also ohne eine Kante. Der tangentiale Übergang ohne Kante ermöglicht es der schräglaufenden Kette dennoch sanft und geräuschreduziert außer Eingriff zu gleiten. Bei einem Übergang mit Kante neigt die Kette bei großem Schräglauf dazu, beim Ausgleiten zu "springen", was zu noch mehr Vibration und Geräusch führt. Die verrundeten Ausgleitfasen auf der Innenseite des Ritzels sind wiederum besonders an den größten Ritzeln von Bedeutung, auf denen der Kettenschräglauf am größten ist.

Gemäß einer nicht beanspruchten Ausführungsform der erfindungsgemäßen Mehrfach-Ritzelanordnung ist zumindest ein Teil der benachbarten Ritzel der Ritzelanordnung integral bzw. aus einem Stück gefertigt. Besonders hochwertige Ritzel-Pakete sind sogar komplett aus einem Stück gefertigt, insbesondere gefräst. Die Ritzelanordnungen bestehen aus einem einzigen Teil, das nicht weiter zusammengebaut werden muss.

Einstückig gefertigte Ritzelanordnungen und solche die zu einem großen Teil einstückig gefertigt sind, sind jedoch anfällig was die Geräuschbildung beim Eingreifen der Ketten angeht. Aus der DE 10 2011 010 855 der Anmelderin sind Mittel zur Dämpfung der auftreffenden Kette bekannt. Darin werden insbesondere elastische Dämpfungsringe beschrieben, die zwischen den Ritzeln angeordnet werden und so zur Geräuschminderung beitragen. Die Kombination von solchen Gummiringen mit den verrundeten Fasen an den Zähnen der größten Ritzel sind ein besonders effektiver Beitrag zur Geräuschminderung.

Alternativ bieten sich auch günstigere Fertigungsarten an. Häufig wird das größte Ritzel als separates Ritzel gefertigt und anschließend mit den restlichen, einstückig gefertigten Ritzeln verbunden, insbesondere zusammengesteckt. Denkbar wäre auch jedes Ritzel des Ritzel-Pakets separat zu fertigen, insbesondere zu stanzen und anschließend zu verbinden. Die Einzelritzel können beispielsweise zusammengesteckt, miteinander vernietet, über ein separates Bauteil (Spider) miteinander verbunden oder zusammengeschweißt werden. Eine Kombination der genannten oder sonstigen üblichen Fügearten an einem Ritzel-Paket ist ebenfalls denkbar.

Diese Beschreibung betrifft weiterhin einen nicht beanspruchten Fahrradantrieb mit einer solchen erfindungsgemäßen Mehrfach-Ritzelanordnung, einer Fahrradkette und einer vorderen Kettenringanordnung mit mindestens einem Kettenring. Die Mehrfach-Ritzelanordnung und die Kettenringanordnung sind so zueinander positioniert, dass wenn die Fahrradkette entlang einer neutralen Kettenlinie verläuft, sich die Mehrfach-Ritzelanordnung in eine Anzahl von größeren Ritzeln mit größerer Zähneanzahl und eine Anzahl von kleineren Ritzeln mit kleinerer Zähneanzahl teilt. Dabei ist die Anzahl von kleineren Ritzeln gleich oder größer ist als die Anzahl von größeren Ritzeln.

Insbesondere sind die größeren Ritzel mit größerer Zähneanzahl jeweils im kleinsten Abstand zueinander angeordnet und die kleineren Ritzel mit kleinerer Zähneanzahl jeweils in einem größeren Abstand zueinander angeordnet.

Diese Anordnung des Fahrradantriebs minimiert die Folgen des Kettenschräglaufs, besonders im Bereich der kleineren Ritzel, die rechts bzw. außen von der neutralen Kettenlinie angeordnet sind.

Gemäß einer nicht beanspruchten Ausführungsform des Fahrradantriebs umfasst die Mehrfach-Ritzelanordnung genau zwölf Ritzel und die Kettenringanordnung genau zwei Kettenringe. Bei dieser Anordnung verläuft die neutrale Kettenlinie der Fahrradkette zwischen einem kleinen Kettenring und dem sechsten Ritzel. Somit teilt die neutrale Kettenlinie die zwölf Ritzel in fünf größere Ritzel R1-R5 mit größeren Zähnezahlen und sechs kleinere Ritzel R7-R12 mit kleineren Zähnezahlen. Wobei die fünf größeren Ritzel R1-R5 jeweils im kleinsten Abstand zueinander angeordnet sind und die sechs größeren Ritzel jeweils in einem größeren Abstand.

Die erfindungsgemäße Abstandverteilung lässt sich auch auf andere Fahrradantriebe anwenden. So sind auch Antriebe mit einem, zwei oder drei vorderen Kettenblätter in Kombination mit Mehrfach-Ritzelanordnungen mit zehn bis 14 Ritzeln denkbar, die entsprechende Anteile von kleinsten Abständen und größeren Abständen aufweisen. Für Kettenblatt-Anordnungen mit zwei Kettenblättern könnten folgende Abstufungen eingesetzt werden: Großes Kettenblatt 50 Zähne, kleines Kettenblatt 37 Zähne; großes Kettenblatt 48 Zähne, kleines Kettenblatt 35 Zähne; großes Kettenblatt 46 Zähne, kleines Kettenblatt 33 Zähne.

Gemäß einer nicht beanspruchten Ausführungsform des Fahrradantriebs weist dieser ein elektrisch gesteuertes Schaltwerk und/oder einen elektrisch gesteuerten vorderen Umwerfer auf. Vorzugsweise werden das elektrische Schaltwerk und/oder der elektrische vordere Umwerfer kabellos gesteuert.

### Kurzbeschreibung der Zeichnungen:

- Fig. 1: Fahrrad mit einem erfindungsgemäßen Fahrradantrieb und einer erfindungsgemäßen Mehrfach-Ritzelanordnung
- Fig. 2: Schematische Darstellung des Kettenschräglaufs
- Fig. 3: Perspektivische Teilschnitt-Ansicht einer ersten Ausführungsform der erfindungsgemäßen Mehrfach-Ritzelanordnung
- Fig. 4: Perspektivische Innenansicht der ersten Ausführungsform der Mehrfach-Ritzelanordnung
- Fig. 5: Vergrößerte Schnittdarstellung der Mehrfach-Ritzelanordnung aus Fig. 3
- Fig. 6: Darstellung der Mehrfach-Ritzelanordnung aus Fig. 5 ohne Antreiber und Adapter
- Fig. 7: Perspektivische Teilschnitt-Ansicht einer zweiten Ausführungsform der erfindungsgemäßen Mehrfach-Ritzelanordnung
- Fig. 8: Perspektivische Innenansicht der zweiten Ausführungsform der Mehrfach-Ritzelanordnung
- Fig. 9: Schnittansicht der zweiten Ausführungsform
- Fig. 10: Diagramm zur Darstellung von Abstandsverteilungen bei zwölf Ritzeln
- Fig. 11: Diagramm zur Darstellung von Abstandsverteilungen bei zwölf Ritzeln
- Fig. 12: Diagramm zur Darstellung einer Abstandsverteilung für 13 Ritzel

### Detaillierte Beschreibung der bevorzugten Ausführungsformen

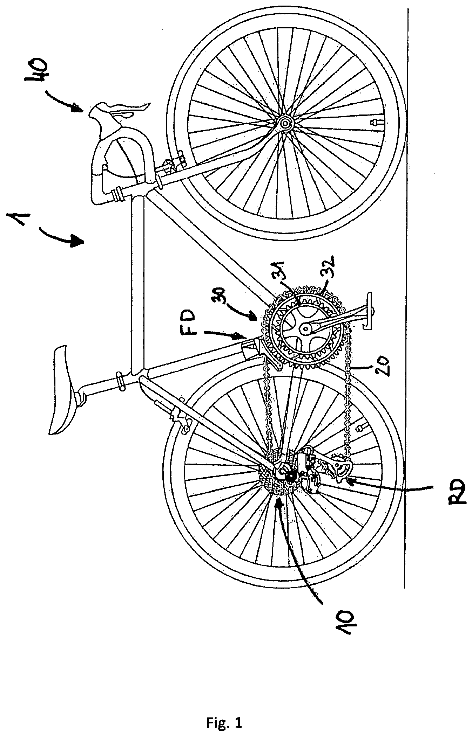

Die im Folgenden verwendeten Richtungsangaben rechts/links, oben/unten und hinten/vorne beziehen sich auf ein Fahrrad in Fahrtrichtung gesehen (vgl. Figur 1). Die Richtungsangaben innen/außen beziehen sich auf die Fahrradmitte. Axial bezieht sich auf die Mittelachse der Mehrfach-Ritzelanordnung. So sind die durchmesserkleineren Ritzel mit einer geringeren Zähneanzahl der Mehrfach-Ritzelanordnung axial weiter rechts bzw. weiter außen (auch "outboard" genannt) angeordnet, als die durchmessergrößeren Ritzel mit einer größeren Zähnezahl. Die größeren Ritzel sind umgekehrt also axial weiter links bzw. weiter innen (auch "inboard" genannt) angeordnet, als die kleineren Ritzel. Im Gegensatz dazu ist das kleinere Kettenblatt der vorderen Kettenblattanordnung weiter links bzw. weiter innen angeordnet, als das große Kettenblatt. Die Zähne sind radial außen am Ritzel und dem Kettenblatt angeordnet.

Figur 1 zeigt ein Fahrrad 1 mit einer erfindungsgemäßen Mehrfach-Ritzelanordnung 10 und einem Fahrradantrieb. Der Fahrradantrieb besteht aus einer vorderen Kettenblatt-Anordnung 30, die ein kleines Kettenblatt 31 und ein großes Kettenblatt 32 umfasst, einer hinteren Mehrfach-Ritzelanordnung 10 und einer Fahrradkette 20. Die Mehrfach-Ritzelanordnung 10 besteht aus einer erhöhten Anzahl von mindestens zwölf Ritzeln R1-R12. Die Ritzel R der Ritzelanordnung 10 weisen unterschiedliche Zähnezahlen auf und sind in einem vorgegebenen Abstand A zueinander angeordnet. Die vorgegeben Abstände A sind unterschiedlich groß und lassen sich in kleinste Abstände A1 und größere Abstände A2-A7 einteilen. Die Fahrradkette 20 steht mit den Zähnen eines der Kettenblätter, in dem gezeigten Fall dem großen Kettenblatt 32 der Kettenblatt-Anordnung 30 und den Zähnen 11 eines der benachbarten Ritzel RN der Mehrfach-Ritzelanordnung 10 in Eingriff. Mittels der Fahrradkette 20 wird Kraft von der vorderen Kettenblatt-Anordnung 30 auf die hintere Mehrfach-Ritzelanordnung 10 übertragen. Ein vorderer Umwerfer FD bewegt die Fahrradkette 20 beim Schalten von einem Kettenblatt auf das andere Kettenblatt. Ein hinterer Umwerfer bzw. das Schaltwerk RD bewegt die Fahrradkette 20 beim Schalten von einem Ritzel RN auf das nächstkleinere Ritzel RN+1 oder auf das nächstgrößere Ritzel RN-1.

Der vordere Umwerfer FD und/oder hintere Umwerfer RD können dabei entweder mechanisch oder elektrisch bedient werden. Im gezeigten Ausführungsbeispiel sind sowohl der vordere Umwerfer FD, als auch das hintere Schaltwerk RD elektrisch zu bedienen. Mit einer oder mehreren am Lenker montierten Schaltvorrichtungen 40 wird das hintere elektrische Schaltwerk RD und/ oder der vordere elektrische Umwerfer FD kabellos angesteuert. Bei einer Kettenblatt-Anordnung mit nur einem Kettenblatt entfällt der vordere Umwerfer.

Damit das hintere Schaltwerk RD jedes der Ritzel R1-R12, trotz der unterschiedlich großen Ritzel-Abstände A sauber anfahren kann, wird bei einem elektrisch gesteuerten Schaltwerk ein entsprechendes Schaltprotokoll in der Steuereinheit des Schaltwerks hinterlegt, das die unterschiedlichen Abstände A wiederspiegelt. Bei einer manuellen Steuerung des Schaltwerks RD würden entsprechend die Geometrie der Schalthebelmechanik, insbesondere die Zähne der darin befindlichen Schaltscheiben und/oder die Geometrie der Schaltwerksfinne an die unterschiedlich großen Abstände angepasst.

Die erfindungsgemäße Mehrfach-Ritzelanordnung ist nicht nur für ein dargestelltes Rennrad geeignet, sondern kann an einer Vielzahl von Fahrradtypen, wie Mountainbikes, Tourenräder oder E-Bikes zum Einsatz kommen.

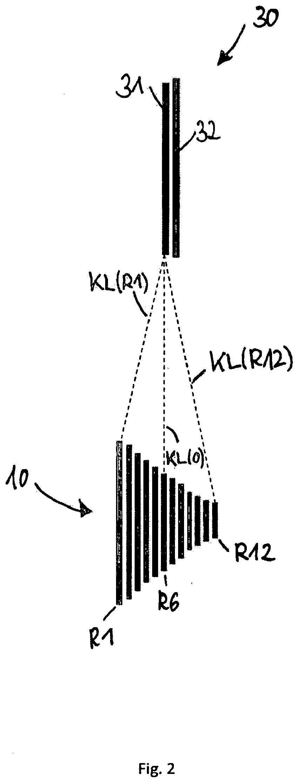

Figur 2 zeigt eine schematische Darstellung eines Fahrradantriebs zur Verdeutlichung des Kettenschräglaufs. Die vordere Kettenblatt-Anordnung 30 umfasst ein kleineres Kettenblatt 31 und ein größeres Kettenblatt 32. Die Mehrfach-Ritzelanordnung 10 umfasst zwölf Ritzel (R1-R12), wobei das Ritzel R1 das durchmessergrößte Ritzel und das Ritzel R12 das durchmesserkleinste Ritzel ist. Die Kettenblatt-Anordnung 30 ist im Verhältnis zur Mehrfach-Ritzelanordnung 10 so ausgerichtet, dass eine neutrale Kettenlinie KLO vorliegt, wenn die Kette mit dem kleinen Kettenblatt 31 und dem sechstgrößten Ritzel R6 in Eingriff steht. Die neutrale Kettenlinie KLO entspricht in etwa dem idealen Verlauf der Kette, bei dem so gut wie kein Kettenschräglauf auftritt. Dabei liegt das in Eingriff stehende vordere Kettenblatt in einer Flucht mit dem in Eingriff stehenden hinteren Ritzel. Die Kräfte können optimal vom Kettenblatt auf das Ritzel übertragen werden. Eine besonders starke Ablenkung der Kette von dieser neutralen Kettenlinie KLO bzw. ein besonders starker Kettenschräglauf tritt auf, wenn die Kette mit dem größten Ritzel R1 oder mit dem kleinsten Ritzel R12 in Eingriff steht.

Die Kettenlinie KLR12, vom kleinen Kettenblatt 31 zum kleinsten Ritzel R12 ist besonders kritisch, weil sie den stärksten Schräglauf aller möglichen Kettenverläufe des Antriebs darstellt. Außerdem besteht auf den kleineren Ritzeln noch zusätzlich die Gefahr, dass die schräglaufende Kette mit dem nächstgrößeren Ritzel kollidiert. Dem wirkt die erfinderische Abstandverteilung entgegen.

Die neutrale Kettenlinie KLO teilt das Ritzel-Paket 10 mit seinen zwölf Ritzeln R1-R12 in fünf weiter innen bzw. links liegende Ritzel R1-R5 mit größeren Durchmessern und sechs weiter außen bzw. rechts liegende Ritzel R7-R12 mit kleineren Durchmessern. Steht die Kette mit dem großen, weiter außen liegenden Kettenrad 32 in Eingriff, verschiebt sich auch die neutrale Kettenlinie KL0 nach außen, etwa auf das Ritzel R7. Entsprechend ist der besonders kritische Schräglauf auf dem kleinsten Ritzel R12 etwas weniger stark.

Je nach Rahmengeometrie und Antrieb verschiebt sich die neutrale Kettenlinie weiter nach innen oder außen. Ein erfindungsgemäßer Fahrradantrieb kann aus einer Kombination von ein, zwei oder drei vorderen Kettenblättern und zehn, elf, zwölf, dreizehn oder vierzehn Ritzeln bestehen. Bei Antrieben mit zwei oder drei vorderen Kettenblättern wird die neutrale Kettenlinie KL0 auf dem kleinsten der Kettenblätter definiert, weil auf diesem der Kettenschräglauf stärker als auf den größeren Kettenblättern ausgeprägt ist. Es ist zu bedenken, dass die vordere Kettenrad-Anordnung 30 gegenüber der Mehrfach-Ritzelanordnung 10 nicht beliebig nach außen verschoben werden kann. Zum einen würde sich damit der Kettenschräglauf auf dem größten Ritzel vergrößern. Zum anderen würde sich mit der Kettenrad-Anordnung auch die Position der Tretkurbel verschieben. Die Tretkurbel soll aus ergonomischen Gründen möglichst eng am Fahrradrahmen, also möglichst weit innen liegen. Außerdem würde eine weit außen liegende Tretkurbel das Risiko erhöhen, dass in engen und schnell gefahrenen Kurven das kurveninnere Pedal aufsetzt.

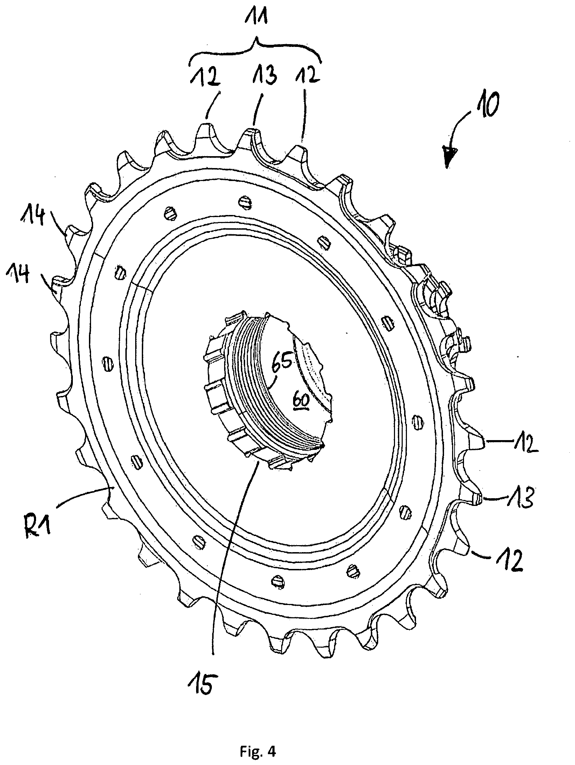

Um die Folgen des Kettenschräglaufs auf den kleineren Ritzeln zu mindern, sind idealerweise die rechts von der neutralen Kettenlinie KLO liegenden Ritzel in größeren Abständen zueinander angeordnet, als die Ritzel links von der Kettenlinie KL0. Um noch innerhalb des vorgegebenen Bauraums zu bleiben, sind die Ritzel links von der neutralen Kettenlinie KL0 in möglichst kleinen Abständen, insbesondere kleinsten Abständen zueinander positioniert. Um die Folgen des Kettenschräglaufs auf den größeren Ritzeln zu mindern, können insbesondere an den größten Ritzeln R1 und R2 weitere Maßnahmen (dicke und dünne Zähne, verrundete Fasen) getroffen werden, auf die in Zusammenhang mit Figur 4 eingegangen wird.

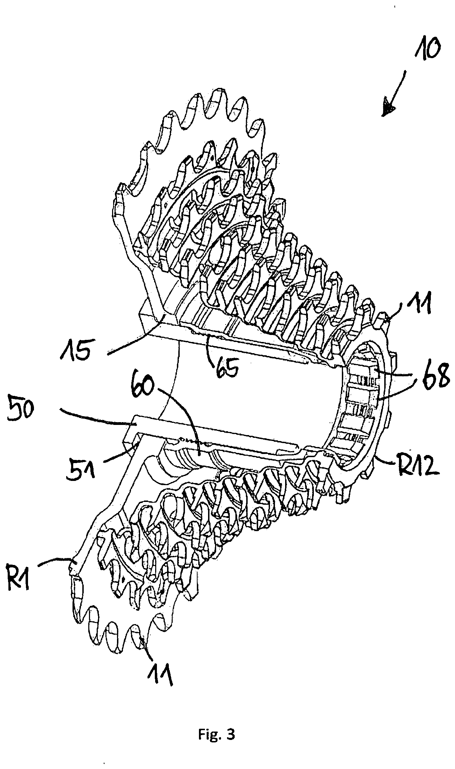

Figur 3 zeigt eine perspektivische Teilschnitt-Ansicht einer ersten Ausführungsform der erfindungsgemäßen Mehrfach-Ritzelanordnung 10. Das Ritzel-Paket 10 umfasst zwölf benachbarte Ritzel (R1-R12) mit unterschiedlich großen Durchmessern und damit einhergehenden unterschiedlichen Zähnezahlen. Das größte Ritzel R1 steht in drehmomentübertragendem Eingriff mit dem Antreiber 50, der das Drehmoment weiter auf eine hier nicht dargestellte Hinterradnabe überträgt. Dazu weist das Ritzel R1 ein Eingriffsprofil 15 auf, das mit einem Gegenstück am Antreiber 50 in Eingriff gebracht wird. Die Mehrfach-Ritzelanordnung 10 wird so weit auf den Antreiber 50 geschoben, bis das größte Ritzel R1 mit einem radial weiter innen liegenden Anschlagsbereich an dem Antreiberanschlag 51 anliegt. Der Adapter 60 wird mit seinem Innengewinde 65 auf das entsprechende Außengewinde des Antreibers 50 geschraubt und legt die Mehrfach-Ritzelanordnung 10 auf dem Antreiber 50 in axialer Richtung fest. Dazu wird der Adapter 60 einerseits auf dem Antreiber 50 befestigt, insbesondere aufgeschraubt, so dass das größte Ritzel R1 zwischen den Antreiberanschlag 51 und dem inneren Ende des Adapters 60 fixiert ist. Und andererseits hintergreift der Adapter 60 mit seinen Schnappvorsprüngen 68 einen entsprechenden Gegenschnappvorsprung am kleinsten Ritzel R12 der Mehrfach-Ritzelanordnung 10 und legt damit das Ritzel-Paket 10 gegenüber dem Antreiber 50 axial fest.

Die Ritzel R2 bis R11 sind einstückig gefertigt, insbesondere aus einem Stück gefräst, und weisen einen konischen Verlauf auf. Das größte Ritzel R1 wird separat gefertigt und mit den restlichen Ritzeln R2-R11 drehmomentübertragend verbunden. Das größte Ritzel R1 ist, um Gewicht zu sparen, insbesondere aus Aluminium gefertigt. Im gezeigten Fall ist das größte Ritzel R1 mittels einer Steckverbindung an dem Ritzel R2 befestigt. Das Ritzel-Paket 10 stützt sich im Bereich des größten Ritzels R1 und im Bereich der kleinsten Ritzel R10-R12 radial am Antreiber 50 oder am Adapter 60 ab. Dazwischen ist das Ritzel-Paket 10 freitragend ausgebildet. Das größte Ritzel R1 ist gekröpft ausgebildet und folgt damit dem Verlauf der Speichen, aufgrund dessen dem Ritzel R1 radial außen (im Bereich der Zähne) mehr axialer Bauraum zur Verfügung steht als radial innen (im Bereich des Antreibers). Die kleinsten Ritzel R11 und R12 weisen einen kleineren Innendurchmesser als der Außendurchmesser des Antreibers 50 auf und sind in axialer Richtung weiter außen als der Antreiber 50 angeordnet.

Figur 4 ist eine perspektivische Innenansicht der ersten Ausführungsform der Mehrfach-Ritzelanordnung 10 aus Figur 3, jedoch ohne den Antreiber 50. In dieser Ansicht ist der Adapter 60 mit seinem Innengewinde 65 gut zu erkennen. Die Drehmomentübertragung vom Ritzel-Paket 10 auf den Antreiber 50 geschieht ausschließlich im Bereich des Profils 15 des größten Ritzels R1. Ebenfalls gut zu erkennen ist die Abfolge von dünnen Zähnen 12 und dicken Zähnen 13. Dick und dünn bezieht sich dabei auf die Materialstärke der Zähne 11 in axialer Richtung gemessen. In dieser Ausführungsform verdicken und verdünnen sich die Zähne 12, 13 nur in einer axialen Richtung, nämlich in Richtung der Innenseite des ersten Ritzels R1. Somit bleibt die Außenseite des Ritzels R1 gleichmäßig flach (vgl. Fig. 3), was das Anbringen von Schaltgassen erleichtert. Gleichzeitig führen die Verdickungen für die dicken Zähne 13 bzw. die Ausnehmungen für die dünnen Zähne 12 auf der Innenseite des größten Ritzels R1 (vgl. Fig. 4) eingreifenden Ketten sicher auf dem Ritzel. Die verbesserte Kettenführung schwächt die Negativfolgen des Kettenschräglaufs auf den großen Ritzeln ab. Insbesondere die Vibration der Kette und die damit einhergehende Geräuschbildung werden reduziert. Das größte Ritzel R1 weist eine gerade Anzahl von hier 28 Zähnen 11 auf, so dass eine wiederholte Abfolge von dünnen Zähnen 12 und dicken Zähnen 13 entlang des gesamten Umfangs möglich ist. Auch das hier nicht sichtbare zweitgrößte Ritzel R2 weist auf seiner Innenseite alternierende dicke und dünne Zähne auf. Auf den beiden größten Ritzeln R1 und R2 ist der Kettenschräglauf besonders stark, weshalb eine verbesserte Kettenführung von besonderer Bedeutung ist. Es könnten aber auch an weiteren Ritzeln dünne und dicke Zähne im Wechsel auftreten.

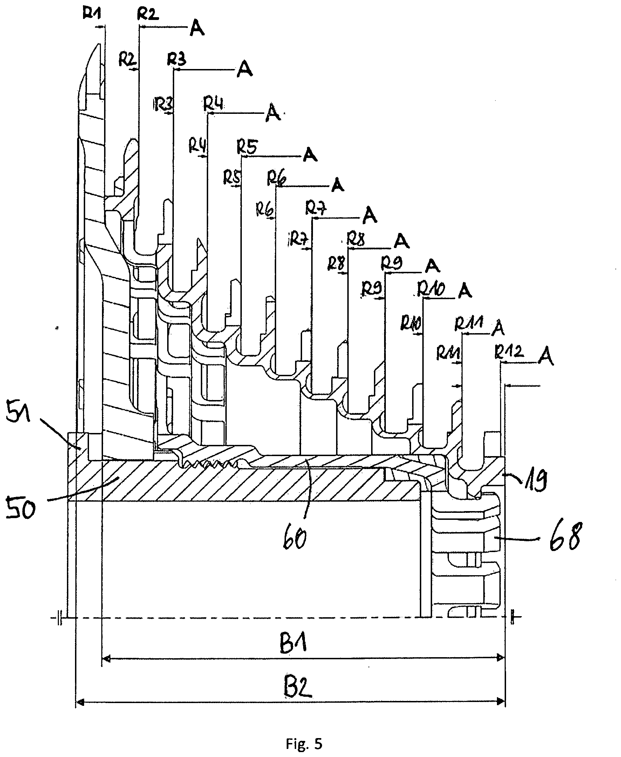

Die Zähne 11 des größten Ritzels R1 weisen auf der Innenseite zusätzlich verrundete Ausgleitfasen 14 auf. Das heißt, der Übergang zwischen der sich am Zahnkopf befindenden Ausgleitfase 14 zum Zahnkörper verläuft tangential, also ohne eine Kante. Die verrundeten Ausgleitfasen 14 auf der Innenseite des Ritzels sind wiederum besonders an den größten Ritzeln von Bedeutung, auf denen der Kettenschräglauf besonders stark ist. Daher weist auch das hier nicht sichtbare zweitgrößte Ritzel R2 diese Ausgleitfasen auf (vgl. Fig. 5).

Gleichermaßen könnten solche verrundeten Ausgleitfasen auch an den Außenseiten der kleinsten Ritzel, insbesondere der beiden kleinsten Ritzel, zur Minderung der Folgen des Kettenschräglaufs beitragen. Da die Kette auf den größeren, weiter innen liegenden Ritzeln von innen nach außen verläuft, müssen die verrundeten Fasen bei den größeren Ritzeln auf der Innenseite angeordnet sein. Umgekehrt verläuft die Kette auf den kleinsten, weiter außen liegenden Ritzeln von außen nach innen, weshalb die verrundeten Ausgleitfasen auf der Außenseite angeordnet wären.

Figur 5 zeigt eine vergrößerte Schnittdarstellung der Mehrfach-Ritzelanordnung 10 aus Figur 3. Gut zu erkennen ist die axiale Festlegung der Mehrfach-Ritzelanordnung 10 gegenüber dem Antreiber 50 mit Hilfe des Adapters 60. Die Schnappnasen 68 am äußeren Ende des Adapters 60 hintergreifen einen entsprechenden Vorsprung am kleinsten Ritzel R12. Gleichzeitig wird das größte Ritzel R1 zwischen dem Antreiberanschlag 51 und dem inneren Ende des Adapters 60 festgelegt. Aufgrund der Kröpfung des größten Ritzels R1 ist die axiale Breite B1 der Mehrfach-Ritzelanordnung 10 im Bereich des Antreibers 50 (radial innen) geringer, als die axiale Breite B2 im Bereich der Zähne (radial außen). Die Breite B1 ist dabei kleiner bemessen als der vorgegebene Bauraum zwischen Antreiberanschlag 51 und einem hier nicht gezeigten Rahmenanschlag. Der vorgegebene Bauraum variiert, je nachdem welcher Antreiber-Standard verwendet wird. Im gezeigten Fall liegt die axiale Breite B1 der Mehrfach-Ritzelanordnung 10 zwischen 37 mm und 42 mm, insbesondere zwischen 40 mm und 41 mm. Die axiale Breite B2 im Bereich der Zähne des größten Ritzels R1 liegt dabei zwischen 42 mm und 43 mm.

Jeweils zwei benachbarte Ritzel RN, RN+1der zwölf Ritzel R1-R12 sind zueinander in einem vorgegebenen Abstand A angeordnet. Die Abstände A werden dabei jeweils von der Außenseite eines Ritzels RN bis zur Außenseite des benachbarten nächstkleineren Ritzels RN+1 gemessen. Also beispielsweise von der Außenseite des größten Ritzels R1 bis zur Außenseite des nächstkleineren Ritzels R2 oder von der Außenseite des zweitkleinsten Ritzels R11 bis zur Außenseite des kleinsten Ritzels R12. So ergeben sich zwischen den zwölf Ritzeln R1-R12 elf vorgegebene Abstände A. Diese elf Abstände A lassen sich entweder einem kleinsten Abstand oder größeren Abständen zuordnen.

Ein Abstand A umfasst nicht nur den Freiraum zwischen zwei benachbarten Ritzeln, sondern auch die Ritzeldicke des kleineren der beiden Ritzel. Die axiale Dicke der Ritzel R1 bis R12 kann konstant sein oder variieren. Im gezeigten Fall ist das drehmomentübertragende Ritzel R1 und das Ritzel R2 etwas dicker als die Ritzel R3 bis R11 ausgebildet. Die Ritzel R1 und Ritzel R2 weisen Zähne 11 auf, die als dünne Zähne 12 und dicke Zähne 13 ausgebildet sind. Diese Verdickung der Zähne 13 findet im gezeigten Fall nur an der Innenseite der Ritzel R1 und R2 statt und ist nach außen nicht sichtbar (vgl. Figur 4). Das kleinste Ritzel R12 weist zusätzlich eine Wulst 19 im Bereich des Fußkreises auf. Diese Wulst 19 drückt eine in das kleinste Ritzel R12 eingreifende Fahrradkette in axialer Richtung weiter nach außen und vermindert dadurch die Folgen des Kettenschräglaufs.

Beispielsweise wären folgende axiale Ritzeldicken denkbar: R1 entspricht 2,6 mm, R2 entspricht 2,4 mm, R3 bis R11 entsprechen 1,55 mm und R12 entspricht 1,75 mm. Die Wulst 19 weist vorzugsweise ein Maß von 0,4 mm auf. Ritzel R1 und R2 haben aufgrund der dicken Zähne 13 eine größere Abmessung.

Um Gewicht zu sparen, weist zumindest ein Teil der Ritzel R1 bis R5 bzw. die Verbindungstücke zwischen den Ritzeln R1 bis R5 Materialausnehmungen 17 auf.

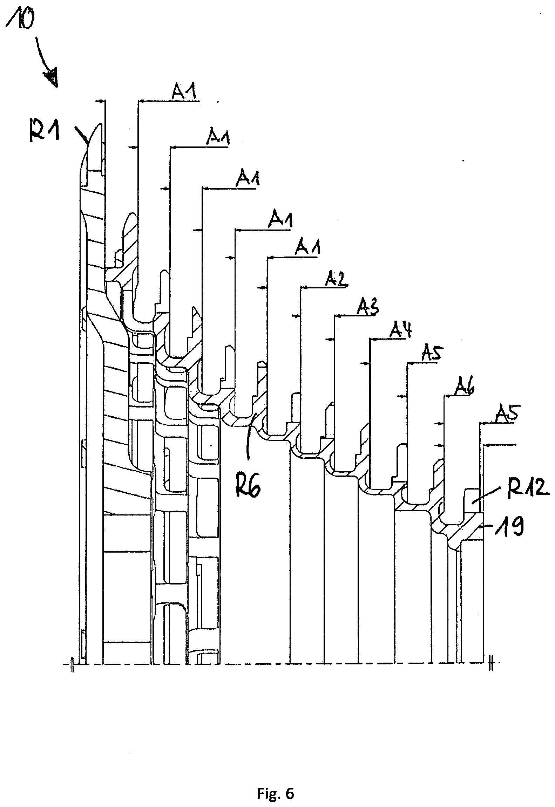

Figur 6 zeigt den Schnitt der Mehrfach-Ritzelanordnung 10 aus Fig. 5 ohne den Antreiber und den Adapter. Die oben beschriebenen elf Abstände A zwischen jeweils zwei benachbarten Ritzeln RN, RN+1 lassen sich entweder einem kleinsten Abstand A1 oder größeren Abständen A2-A6 zuordnen. In dem gezeigten ersten Ausführungsbeispiel der erfindungsgemäßen Mehrfach-Ritzelanordnung 10 sind die Ritzel R1 bis R12 in den folgenden Abständen A zueinander angeordnet: A1-A1-A1-A1-A1-A2-A3-A4-A5-A6-A5. Die sechs größten Ritzel R1 bis R6 sind demnach in einem konstant kleinsten Abstand A1 zueinander angeordnet. Die restlichen Ritzel R7 bis R12 sind dann in einem größeren Abstand A2-A6 voneinander beabstandet. Die größeren Abstände A2 bis A6 sind nicht konstant und haben deshalb verschiedene Bezugszeichen A2 bis A6. Alle größeren Abstände A2 bis A6 weisen ein größeres Maß als die kleinsten Abstände A1 auf. Von den elf Abständen A der ersten Ausführungsform der Mehrfach-Ritzelanordnung entfallen fünf Abstände auf die kleinsten Abstände A1 und sechs Abstände auf die größeren Abstände A2-A6. Dies führt zu einem Abstandsverhältnis von 5:6 oder anders ausgedrückt zu einem Anteil der kleinsten Abstände A1 von 45,45 % und einem Anteil von größeren Abständen A2-A6 von 54,55 %. Der Anteil an kleinsten Abständen A1 liegt unter den anspruchsgemäßen Höchstwerten von 70 %, von 60 % und auch von 50 %.

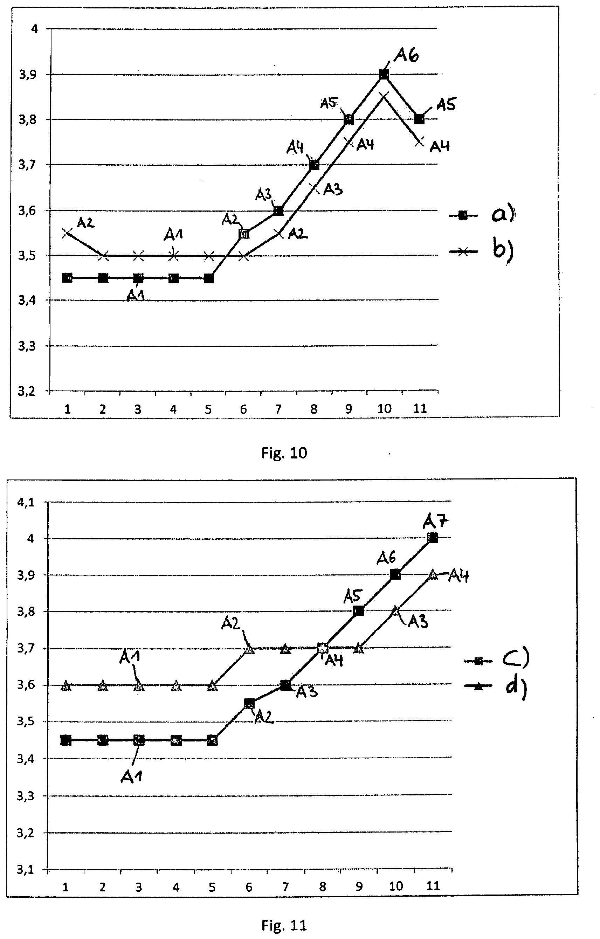

Diese Abstandsverteilung der Mehrfach-Ritzelanordnung 10 ist auch als Graph a) im Diagramm in Figur 10 dargestellt. Das Diagramm ordnet den Abständen A1 bis A6 Maßangaben in mm zu. Es ist zu erkennen, dass die fünf kleinsten Abstände A1 ein konstantes Maß von 3,45 mm haben, bevor ein größerer Abstand A2 mit einem Maß von 3,55 mm folgt. Danach folgt ein weiterer größerer Abstand A3 mit einem Maß von 3,6 mm. Anschließend steigen die Abstände A4, A5 und A6 linear in 0,1 mm-Schritten an - A4 = 3,7 mm, A5 = 3,8 mm; A6 = 3,9 mm. Der letzte größere Abstand A5 zwischen dem Ritzel R11 und R12 entspricht dann wieder 3,8 mm. Dieser gegenüber dem Abstand A6 etwas geringere Abstand A5 ist durch die zusätzliche Wulst 19 am kleinsten Ritzel R12 zu begründen.

Alternativ könnte die Wulst 19 weggelassen werden und der letzte größere Abstand A7 zwischen Ritzel R11 und Ritzel R12 weiter linear auf einen Wert von 4,0 mm ansteigen. Diese Variante ist in Figur 11 mit dem Graph c) dargestellt.

Die fünf kleinsten Abstände A1 in den Graphen in Figur 10 und 11 sind zur besseren Übersichtlichkeit jeweils nur einmal mit dem Bezugszeichen A1 beschriftet. Die jeweils fünf kleinsten Abstände A1 in den Varianten a) bis d) weisen ein konstantes Maß auf.

In Figur 6 ist außerdem zu erkennen, dass die Verbindungsstücke, die sich in axialer Richtung zwischen jeweils benachbarten Ritzeln erstrecken, etwas abgesenkt sind und damit eine umlaufende Nut zwischen benachbarten Ritzeln bilden. In dieser Nut könnten hier nicht gezeigte elastische Dämpfungsringe angeordnet werden.

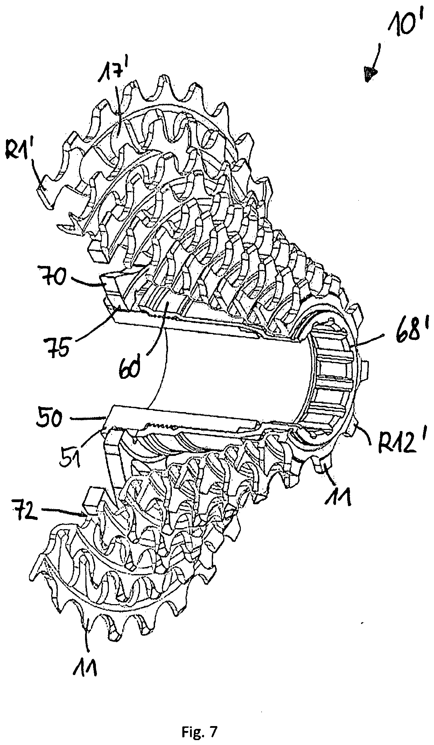

Figur 7 zeigt eine perspektivische Teilschnitt-Ansicht einer zweiten Ausführungsform der erfindungsgemäßen Mehrfach-Ritzelanordnung 10', welche in weiten Teilen der ersten Ausführungsform entspricht. Unveränderte Teile tragen daher die gleichen Bezugszeichen und werden, genau wie deren Zusammenwirken, nicht noch einmal beschrieben. Das Ritzel-Paket 10' umfasst ebenfalls zwölf benachbarte Ritzel (R1'-R12') mit unterschiedlich großen Durchmessern und damit einhergehenden unterschiedlichen Zähnezahlen. Anders als bei der ersten Ausführungsform steht jedoch nicht das größte Ritzel R1' in drehmomentübertragendem Eingriff mit dem Antreiber 50, sondern ein separates Bauteil 70. Das drehmomentübertragende Bauteil 70 weist dafür entlang seines Innendurchmessers ein Eingriffsprofil 75 auf, das mit einem Gegenstück am Antreiber 50 in Eingriff gebracht wird. Das Bauteil 70 weist weiter an seinem Außendurchmesser ein weiteres Eingriffsprofil 72 auf, das mit der Mehrfach-Ritzelanordnung 10' in Eingriff gebracht ist. Im gezeigten Fall greift das Profil 72 in den Verbindungsbereich zwischen dem zweiten Ritzel R2' und dem dritten Ritzel R3' ein. Das gesamte Drehmoment der Mehrfach-Ritzelanordnung 10' wird also im Bereich des zweiten und dritten Ritzels R2'/R3' über das Bauteil 70 auf den Antreiber 50 übertragen. Das Bauteil 70 dient auch als radiale Abstützung der Ritzelanordnung 10' auf dem Antreiber 50. Außerdem wird das Bauteil 70 zwischen dem Antreiberanschlag 51 und dem inneren Ende des Adapters 60' axial festgelegt. Der Adapter 60' unterscheidet sich von der ersten Ausführungsform insofern, dass dieser anstelle von flexiblen Schnappvorsprüngen 68 einen geschlossenen und daher starren äußeren Enddurchmesser 68' aufweist, der kleiner Bemessen ist, als der Innendurchmesser des kleinsten Ritzels R12'. Ein hier nicht sichtbarer zusätzlicher Sicherungsring, insbesondere ein Sprengring, mit einem größeren Außendurchmesser als der Innendurchmesser des kleinsten Ritzels R12' wird dazu in eine umlaufende Nut des äußeren Adapterendes gelegt und legt die Mehrfach-Ritzelanordnung 10' gegenüber dem Antreiber 50 axial fest.

Alle Ritzel R1' bis R12' sind einstückig gefertigt, insbesondere aus einem Stück gefräst, und weisen einen konischen Verlauf auf. Das Ritzel-Paket 10' stützt sich im Bereich des zweiten und dritten Ritzels R2'/R3' und im Bereich der kleinsten Ritzel R10'-R12' radial am Antreiber 50 oder am Adapter 60 ab. Dazwischen ist das Ritzel-Paket 10' freitragend ausgebildet.

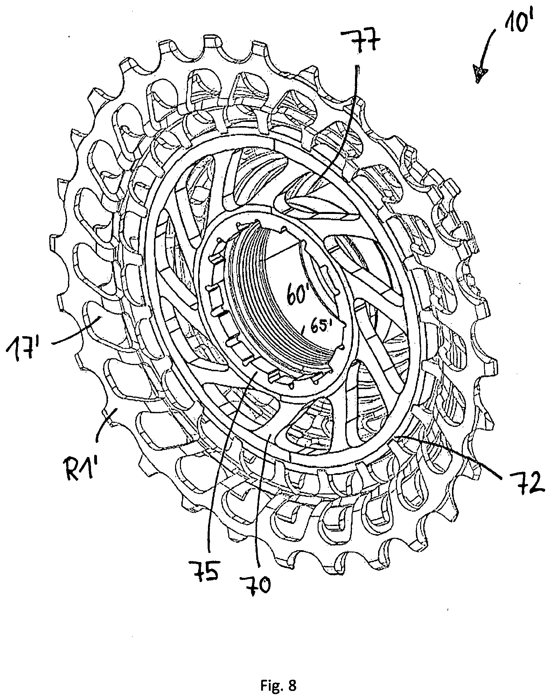

Figur 8 ist eine perspektivische Innenansicht der zweiten Ausführungsform der Mehrfach-Ritzelanordnung 10' aus Fig. 7, jedoch ohne den Antreiber 50, so dass das Eingriffsprofil 75 des drehmomentübertragenden Bauteils 70 sichtbar wird. Ebenfalls ist der Eingriff des Profils 72 des Bauteils 70 an dessen Außenumfang in die Mehrfach-Ritzelanordnung 10' zu sehen. Zur Gewichtseinsparung weisen die größeren Ritzel R1-R4 Materialaussparungen 17' auf. Ebenso weist das drehmomentübertragende Bauteil 70 Materialaussparungen 77 auf. Insbesondere ist das Bauteil 70 aus Aluminium gefertigt.

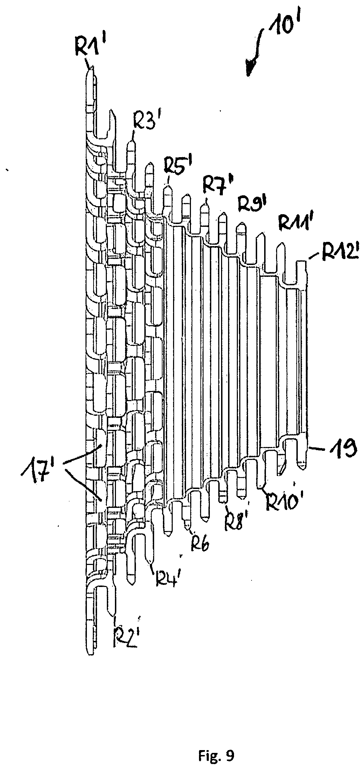

Figur 9 ist eine Schnittansicht der zweiten Ausführungsform der Mehrfach-Ritzelanordnung 10' ohne Antreiber und Adapter. Die zwölf Ritzel R1'-R12' sind ebenfalls in elf vorgegebenen Abständen A zueinander positioniert. Diese Abstände können entweder kleinsten Abständen A1 oder größeren Abständen A2 zugeordnet werden. Die Ritzeldicke entspricht am größten Ritzel R1' 1,9 mm, an den Ritzeln R2' bis R11' 1,6 mm und am kleinsten Ritzel R12' 1,8 mm. Am kleinsten Ritzel R12' kann zusätzlich eine Wulst 19 mit einem Maß von 0,3 mm angeordnet sein.

Eine erfindungsgemäße Mehrfach-Ritzelanordnung kann verschiedene anspruchsgemäße Abstandsverteilungen aufweisen. Exemplarische Abstandsverteilungen sind aus den Graphen a), b), c) und d) in Figur 10, 11 und 12 ersichtlich.

Graph b) zeigt eine weitere Variante der Abstandsverteilung, wobei wieder fünf der elf Abstände auf die kleinsten Abstände A1 entfallen, und damit einen Anteil von 45,45 % ausmachen. Das Maß der kleinsten Abstände A1 beträgt hier 3,5 mm. Die restlichen sechs Abstände sind den größeren Abständen A2-A5 zuzuordnen. Der größere Abstand A2 beträgt 3,55 mm. Die folgenden größeren Abstände A3, A4 und A5 steigen wieder linear in 0,1 mm Schritten an - A3 = 3,65 mm, A4 = 3,75 mm und A5 = 3,85 mm. Der letzte Abstand verringert sich aufgrund der Wulst 19 wieder auf den Abstand A4 mit 3,75 mm. Alternativ zur Wulst könnte aber auch ein größerer letzter Abstand A6 von 3,95 mm vorgesehen sein.

Bei dieser Variante b) ist der Abstand A zwischen dem ersten und zweiten Ritzel ein größerer Abstand A2 und nicht wie in den anderen Varianten ein kleinster Abstand A1. Dies kann baubedingt nötig sein. Gerade bei einstückig gefertigten Ritzel-Paketen, wie sie in der zweiten Ausführungsform gezeigt sind, wäre anstelle des größeren Abstands A2 auch ein kleinster Abstand A1 möglich.

Die Variante d) in Figur 11 zeigt eine weitere Ausführung der Abstandsverteilung mit fünf kleinsten Abständen A1 zwischen den sechs größten Ritzeln R1-R6. Daran schließen sich vier konstant größere Abstände A2 zwischen den Ritzeln R6 bis R10. Die drei kleinsten Ritzel R10, R11 und R12 sind dann in linear ansteigend größeren Abständen A3 und A4 positioniert. In diesem Fall entsprechen die fünf kleinsten Abstände A1 jeweils einem Maß von 3,6 mm, die vier größeren Abstände A2 jeweils einem Maß von 3,7 mm, der größere Abstand A4 einem Maß von 3,8 mm und der größere Abstand A5 einem Maß von 3,9 mm.

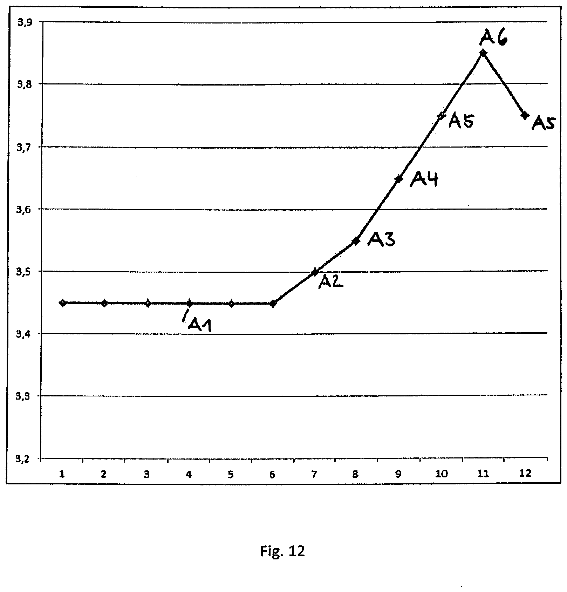

In Figur 12 ist eine weitere mögliche Abstandsverteilung für eine Mehrfach-Ritzelanordnung mit dreizehn Ritzeln R1-R13 und entsprechend zwölf Abständen A gezeigt. Hier sind die größten Ritzel R1 bis R7 jeweils in einem kleinsten Abstand A1 angeordnet. Im gezeigten Fall entsprechen diese sechs kleinsten Abstände A1 jeweils einem Maß von 3,45 mm. Die enge Bauweise im Bereich der größeren Ritzel spart Platz. Die restlichen Ritzel R8 bis R13 sind dann in größeren Abständen A2-A6 zueinander angeordnet und mindern dadurch die Folgen des Kettenschräglaufs auf den kleineren Ritzeln. Die größeren Abstände A2-A6 steigen nicht linear an. A2 entspricht einem Maß von 3,5 mm, A3 einem Maß von 3,55 mm, A4 einem Maß von 3,65 mm, A5 einem Maß von 3,75 mm und A6 einem Maß von 3,85 mm. Das kleinste Ritzel R13 ist dann wieder im größeren Abstand A5 angeordnet. Dies ist wiederum durch eine mögliche Wulst am kleinsten Ritzel R13 zu begründen.

Alternativ könnte die Wulst weggelassen werden und der letzte Abstand weiter auf einen größeren Abstand A7 von 3,95 mm ansteigen.

Damit die Kette mit den Ritzeln in Eingriff gebracht werden kann, müssen die kleinsten Abstände ein Mindestmaß aufweisen. Dieses Mindestmaß entspricht, weil von der Außenfläche eines Ritzels bis zur Außenfläche des nächstkleineren Ritzels gemessen wird, zumindest der Summe der axialen Dicke des nächstkleineren Ritzels, der Dicke einer Ketteninnenlasche und der Dicke einer Kettenaußenlasche. Eine Kette, die zur Nutzung mit einer Mehrfach-Ritzelanordnung mit einer erhöhten Anzahl von mindestens zehn Ritzeln geeignet ist, ist besonders schmal ausgebildet. Beispielsweise könnte die Dicke der Ketteninnenlasche und der Kettenaußenlasche ein gleiches Maß von jeweils 0,75 mm oder 0,8 mm haben. Ausgehend von den schmäleren Ritzeln der Ausführungsbeispiele, die ein Maß von 1,55 mm aufweisen ergibt sich also ein Mindestabstand von 3,05mm (1,55 mm plus 0,75 mm plus 0,75mm). Gemäß dem anderen Ausführungsbeispiel haben die schmäleren Ritzel ein Maß von 1,6 mm. Bei gleichen Kettenlaschendicken von 0,8 mm ergibt sich ein Mindestabstand von 3,2 mm (1,6 mm plus 0,8mm plus 0,8 mm). Zu diesem theoretischen Mindestmaß kommt zusätzlich ein gewisses Spiel, damit sich die Kette nicht verklemmt. Der theoretische Mindestabstand bildet die Basis zur Berechnung des kleinsten Abstands A1, welcher in den gezeigten Varianten zwischen 3,45 mm und 3,6 mm liegt. Tatsächlich hängt die Berechnung des kleinsten Abstands A1 stark von der verwendeten Kette und deren genauer Geometrie und Maßen ab. Alle Abmessungen unterliegen den üblichen Fertigungstoleranzen.

## Patentansprüche

1. Mehrfach-Ritzelanordnung (10) zur Montage an einer Hinterradnabe und zum Eingriff in eine Fahrradkette (20) aufweisend:
mindestens zwölf benachbarte Ritzel (R) mit einer jeweils unterschiedlichen Anzahl von Zähnen (11), wobei
jeweils zwei benachbarte Ritzel (RN, RN+1) der Ritzel (R) zueinander in einem vorgegebenen Abstand (A) angeordnet sind, und
der Abstand (A) von der Außenseite eines Ritzels (RN) bis zur Außenseite des benachbarten nächstkleineren Ritzels (RN+1) gemessen wird, wobei der vorgegebene Abstand (A) entweder einem kleinsten Abstand (A1) oder einem
größeren Abstand (A2-A7) entspricht und die Abstände (A), die einem größeren Abstand (A2-A7) entsprechen, nicht konstant sind,
**dadurch gekennzeichnet,**
**dass** höchstens 50 % der vorgegebenen Abstände (A) dem kleinsten Abstand (A1) entsprechen.

2. Mehrfach-Ritzelanordnung nach einem der vorhergehenden Ansprüche,
**dadurch gekennzeichnet,**
**dass** der oder die dem kleinsten Abstand (A1) entsprechenden Abstände (A) im Bereich der größeren Ritzel (R) mit größeren Zähnezahlen angeordnet sind.

3. Mehrfach-Ritzelanordnung nach Anspruch 2,
**dadurch gekennzeichnet,**
**dass** die den größeren Abständen (A2-A7) entsprechenden Abstände (A) im Bereich der kleineren Ritzel (R) mit kleineren Zähnezahlen angeordnet sind.

4. Mehrfach-Ritzelanordnung nach einem der vorhergehenden Ansprüche,
**dadurch gekennzeichnet,**
**dass** die Abstände (A), die dem kleinsten Abstand (A1) entsprechen, zumindest der Summe aus einer axialen Dicke des nächstkleineren Ritzels (RN+1) plus einer Dicke einer Innerlasche plus einer Dicke einer Außenlasche der Fahrradkette entsprechen.

5. Mehrfach-Ritzelanordnung nach einem der Ansprüche 1 bis 4,
**dadurch gekennzeichnet,**
**dass** die Abstände (A), die einem größeren Abstand (A2-A7) entsprechen, linear ansteigen.

6. Mehrfach-Ritzelanordnung nach einem der Ansprüche 1 bis 4,
**dadurch gekennzeichnet,**
**dass** die Abstände (A), die dem größeren Abstand (A2-A7) entsprechen, nicht-linear ansteigen.

7. Mehrfach-Ritzelanordnung nach einem der vorhergehenden Ansprüche,
**dadurch gekennzeichnet,**
**dass** die Abstände (A), die dem größeren Abstand (A2-A7) entsprechen, um etwa 2 % bis 15 % größer sind, als die kleinsten Abstände (A1).

8. Mehrfach-Ritzelanordnung nach einem der vorhergehenden Ansprüche,
**dadurch gekennzeichnet,**
**dass** die Mehrfach-Ritzelanordnung (10) genau zwölf Ritzel (R1-R12) umfasst.

9. Mehrfach-Ritzelanordnung nach Anspruch 8,
**dadurch gekennzeichnet,**
**dass** das kleinste Ritzel (R12) genau zehn Zähne (11) umfasst und das größte Ritzel (R1) 26, 28, 32 oder 33 Zähne (11) umfasst.

10. Mehrfach-Ritzelanordnung nach einem der vorhergehenden Ansprüche,
**dadurch gekennzeichnet,**
**dass** das kleinste Ritzel (R12) eine Wulst (19) im Bereich des Fußkreises aufweist.

11. Mehrfach-Ritzelanordnung nach einem der vorhergehenden Ansprüche,
**dadurch gekennzeichnet,**
**dass** mindestens ein Ritzel (R) der Ritzelanordnung (10) eine Abfolge von einem dünnen Zahn (12), einem dicken Zahn (13) und einem weiteren dünnen Zahn (12) aufweist.

## Claims

1. Multi-gear pinion assembly (10) for mounting on a rear wheel hub and for engagement into a bicycle chain (20) comprising:
at least twelve adjacent pinions (R) with a respective different number of teeth (11),
in each case two adjacent pinions (RN, RN+1) of the pinions (R) being arranged at a predefined spacing (A) from one another, and
the spacing (A) being measured from the outer side of one pinion (RN) as far as the outer side of the adjacent next smaller pinion (RN+1),
the predefined spacing (A) corresponding either to a smallest spacing (A1) or a greater spacing (A2-A7), and
the spacings (A) which correspond to a greater spacing (A2-A7) not being constant,
**characterized**
**in that** at most 50% of the predefined spacings (A) correspond to the smallest spacing (A1).

2. Multi-gear pinion assembly according to one of the preceding claims,
**characterized**
**in that** the spacing or spacings (A) corresponding to the smallest spacing (A1) is/are arranged in the region of the larger pinions (R) with larger numbers of teeth.

3. Multi-gear pinion assembly according to Claim 2, **characterized**
**in that** the spacings (A) corresponding to the greater spacings (A2-A7) are arranged in the region of the smaller pinions (R) with smaller numbers of teeth.

4. Multi-gear pinion assembly according to one of the preceding claims,
**characterized**
**in that** the spacings (A) corresponding to the smallest spacing (A1) correspond at least to the sum of an axial thickness of the next smaller pinion (RN+1) plus a thickness of an inner plate plus a thickness of an outer plate of the bicycle chain.

5. Multi-gear pinion assembly according to one of Claims 1 to 4,
**characterized**
**in that** the spacings (A) corresponding to a greater spacing (A2-A7) increase in a linear manner.

6. Multi-gear pinion assembly according to one of Claims 1 to 4,
**characterized**
**in that** the spacings (A) corresponding to the greater spacing (A2-A7) increase in a non-linear manner.

7. Multi-gear pinion assembly according to one of the preceding claims,
**characterized**
**in that** the spacings (A) corresponding to the greater spacing (A2-A7) are approximately from 2% to 15% greater than the smallest spacings (A1).

8. Multi-gear pinion assembly according to one of the preceding claims,
**characterized**
**in that** the multi-gear pinion assembly (10) comprises precisely twelve pinions (R1-R12).

9. Multi-gear pinion assembly according to Claim 8,
**characterized**
**in that** the smallest pinion (R12) comprises precisely ten teeth (11), and the largest pinion (R1) comprises 26, 28, 32 or 33 teeth (11).

10. Multi-gear pinion assembly according to one of the preceding claims,
**characterized**
**in that** the smallest pinion (R12) has a bead (19) in the region of the root circle.

11. Multi-gear pinion assembly according to one of the preceding claims,
**characterized**
**in that** at least one pinion (R) of the pinion assembly (10) has a sequence of a thin tooth (12), a thick tooth (13) and a further thin tooth (12).

## Revendications

1. Agencement de pignons multiples (10) pour le montage sur un moyeu de roue arrière et pour l'engagement dans une chaîne de bicyclette (20), présentant :
au moins douze pignons adjacents (R) ayant chacun un nombre de dents (11) différent,
à chaque fois deux pignons adjacents (RN, RN+1) parmi les pignons (R) étant disposés l'un par rapport à l'autre à une distance (A) prédéfinie, et
la distance (A) étant mesurée depuis le côté extérieur d'un pignon (RN) jusqu'au côté extérieur du pignon adjacent suivant le plus petit (RN+1),
la distance (A) prédéfinie correspondant soit à une distance la plus petite (A1) soit à une distance plus grande (A2-A7), et les distances (A) qui correspondent à une plus grande distance (A2-A7) n'étant pas constantes,
**caractérisé en ce**
**qu'**au maximum 50 % des distances prédéfinies (A) correspondent à la distance la plus petite (A1).

2. Agencement de pignons multiples selon l'une quelconque des revendications précédentes,
**caractérisé en ce que**
la ou les distances (A) correspondant à la distance la plus petite (A1) sont disposées dans la région des plus grands pignons (R) ayant les plus grands nombres de dents.

3. Agencement de pignons multiples selon la revendication 2,
**caractérisé en ce que**
les distances (A) correspondant aux plus grandes distances (A2-A7) sont disposées dans la région des plus petits pignons (R) ayant le plus petit nombre de dents.

4. Agencement de pignons multiples selon l'une quelconque des revendications précédentes,
**caractérisé en ce que**
les distances (A) qui correspondent à la plus petite distance (A1) correspondent au moins à la somme d'une épaisseur axiale du pignon suivant le plus petit (RN+1) plus une épaisseur d'une éclisse intérieure plus une épaisseur d'une éclisse extérieure de la chaîne de bicyclette.

5. Agencement de pignons multiples selon l'une quelconque des revendications 1 à 4,
**caractérisé en ce que**
les distances (A) qui correspondent à plus grande distance (A2-A7) croissent de manière linéaire.

6. Agencement de pignons multiples selon l'une quelconque des revendications 1 à 4,
**caractérisé en ce que**
les distances (A) qui correspondent à la plus grande distance (A2-A7) ne croissent pas de manière linéaire.

7. Agencement de pignons multiples selon l'une quelconque des revendications précédentes,
**caractérisé en ce que**
les distances (A) qui correspondent à la plus grande distance (A2-A7) sont d'environ 2 % à 15 % supérieures aux plus petites distances (A1).

8. Agencement de pignons multiples selon l'une quelconque des revendications précédentes,
**caractérisé en ce que**
l'agencement de pignons multiples (10) comprend exactement douze pignons (R1-R12).

9. Agencement de pignons multiples selon la revendication 8,
**caractérisé en ce que**
le plus petit pignon (R12) comprend exactement dix dents (11) et le plus grand pignon (R1) comprend 26, 28, 32 ou 33 dents (11).

10. Agencement de pignons multiples selon l'une quelconque des revendications précédentes,
**caractérisé en ce que**
le plus petit pignon (R12) présente un renflement (19) dans la région du cercle de pied.

11. Agencement de pignons multiples selon l'une quelconque des revendications précédentes,
**caractérisé en ce**
**qu'**au moins un pignon (R) de l'agencement de pignons (10) présente une succession d'une dent mince (12), d'une dent épaisse (13) et d'une dent mince supplémentaire (12).
